# EUROPÄISCHE PATENTSCHRIFT

(11) **EP 3 658 797 B1**
(45) Veröffentlichungstag und Bekanntmachung des Hinweises auf die Patenterteilung: **02.06.2021**
(21) Anmeldenummer: 18742445.2
(22) Anmeldetag: 12.07.2018
(51) Int. Cl.: F16D 65/12, C23C 4/02, C22C 29/08, C23C 4/129, F16D 69/00, C23C 4/06

(54) **BREMSSCHEIBE UND VERFAHREN ZUR HERSTELLUNG EINER BREMSSCHEIBE**
BRAKE DISC AND METHOD FOR MANUFACTURING A BRAKE DISC
DISQUE DE FREIN ET PROCÉDÉ DE FABRICATION D'UN DISQUE DE FREIN

(30) Priorität: 25.07.2017 DE 102017212706
(43) Veröffentlichungstag der Anmeldung: 03.06.2020
(73) Patentinhaber: Robert Bosch GmbH, 70442 Stuttgart (DE)
(72) Erfinder: KUCKERT, Hagen, 74321 Bietigheim-Bissingen (DE); POTAPENKO, Ilja, 35216 Biedenkopf (DE); PFEIFFER, Thomas, 35239 Steffenberg (DE); WU, Kangjian, 35041 Marburg (DE)
(86) Internationale Anmeldenummer: PCT/EP2018/068912
(87) Internationale Veröffentlichungsnummer: WO 2019/020390

(56) Entgegenhaltungen:
- AU-B2- 547 217
- US-A- 5 964 322

## Beschreibung

Die vorliegende Erfindung betrifft eine Bremsscheibe bzw. ein Verfahren zur Herstellung einer Bremsscheibe mit den Merkmalen der unabhängig formulierten Ansprüche.

Bremsscheiben haben die Aufgabe, das Bremsmoment bei einer Verzögerung des Fahrzeugs auf die Achse zu übertragen sowie die bei der Bremsung auftretende kinetische Energie kurzzeitig in Form von Wärme zwischenzuspeichern und nachfolgend über Leitung, Strahlung und Konvektion wieder abzugeben.

Konventionelle Bremsscheiben werden häufig aus dem temperaturbeständigen Grauguss hergestellt. Verschleißfeste Bremsscheiben werden hergestellt, indem entweder sehr teure Vollkeramik-Bremsscheiben eingesetzt oder auf eine Grauguss (GG)-Scheibe mittels thermischer Spritzverfahren, wie beispielsweise HVOF Verfahren, eine Verschleißschutzschicht aufgespritzt wird. Dafür wird häufig WCbasiertes Pulver verwendet, was zu hoher Verschleißfestigkeit führt. Solch eine Bremsscheibe ist in der DE 10 2011 087 136 A1 gezeigt.
AU 547 217 B2 beschreibt eine Bremsscheibe mit einer Grauguss gefertigten Reibfläche und einer auf Teile des Reibfläche aufgebrachten Beschichtung, die Wolfram-Chromcarbid, Wolframcarbid, Chromium und Nickel enthält.

Wie bereits erwähnt wird beim Bremsen Wärme erzeugt, welche in der Bremsscheibe gespeichert wird. Die Temperatur steigt in extremen Fällen, d.h. beim Bremsen aus voller Fahrt, auf bis zu 800 °C. Deswegen müssen die Verschleißschutzschichten der Gusseisen-Bremsscheiben ausreichende Verschleißbeständigkeit bei hohen Temperaturen bis 800°C aufweisen.

### Offenbarung der Erfindung

Die Erfindung geht aus von einer Bremsscheibe mit wenigstens einer aus einem Grundkörper bestehenden Reibfläche. Der Grundkörper kann dabei aus Grauguss gefertigt sein. Auf wenigstens Teilen der Reibfläche ist wenigstens eine Beschichtung aufgebracht.

Der Kern der Erfindung besteht darin, dass die Beschichtung wenigstens Wolfram-Chromcarbid (W, Cr)₂C und Nickel-Chrom NiCr enthält.

In einer besonders vorteilhaften Ausgestaltung der Erfindung ist vorgesehen, dass die Beschichtung weiterhin Wolframcarbid WC enthält.

Beim Wolfram-Chromcarbid (W, Cr)₂C handelt sich um Wolframdikarbid W₂C, in das Chrom mit unterschiedlicher Menge eingebaut ist. Daher wird dieses Mischkarbid als (W, Cr)₂C bezeichnet. Diese Phase verfügt über exzellente Oxidationsbeständigkeit und gute Verschleißbeständigkeit auch bei hohen Temperaturen bis 800 °C. Darüber hinaus steigen die Hochtemperatur-Festigkeit und -Oxidationsbeständigkeit von Nickel durch die Legierung mit Chrom deutlich.

In der Beschichtung sind vorteilhafterweise Wolframcarbid WC in einer Matrixphase aus Wolfram-Chromcarbid (W, Cr)₂C und Nickel-Chrom NiCr im Wesentlichen gleichmäßig eingelagert.

Ab einer Bremstemperatur von ca. 600 °C wird sich vorteilhafterweise an der Schichtoberfläche eine sehr dünne und dichte Oxidschicht bilden, die insbesondere wenigstens Nickelwolframoxid NiWO₄ und/oder Chromwolframoxid CrWO₄ und/oder Chromoxid Cr₂O₃ und/oder Wolframoxid WO₃ enthalten kann. Durch die Bildung der Oxidschicht wird der weitere Oxidationsprozess der Verschleißschutzschicht erheblich verlangsamt, was sehr wirksam eine Oxidation und einen Funktionalitätsverlust der Beschichtung bei hohen Temperaturen vermeidet.

Die erfindungsgemäße Beschichtung kann direkt auf den Grundkörper aufgebracht sein. Hierbei ist insbesondere vorgesehen, dass die Beschichtung auf eine bearbeitet bzw. modifizierte Oberfläche des Grundkörper aufgebracht ist.

Die erfindungsgemäße Beschichtung kann aber auch mittels wenigstens einer Zwischenschicht auf den Grundkörper aufgebracht sein, wobei die Zwischenschicht eine metallische Zwischenschicht, die beispielsweise Nickel Ni enthält, sein kann. Die Zwischenschicht kann aber auch mittels einer Behandlung der Oberfläche des Grundkörpers, zum Beispiel durch eine Umschmelzprozess, realisiert sein.

Die Erfindung betrifft auch die Herstellung einer Bremsscheibe mit wenigstens einer aus einem, insbesondere aus Grauguss gefertigten, Grundkörper bestehenden Reibfläche und wenigstens einer auf wenigstens Teile des Reibfläche aufgebrachten Beschichtung.

Der Kern der Erfindung betrifft den Schritt der Beschichtung wenigstens Teile der Reibfläche mit wenigstens Wolfram-Chromcarbid ((W, Cr)₂C) und Nickel-Chrom (NiCr).

Weitere vorteilhafte Ausgestaltungen der Erfindung sind den Unteransprüchen und dem Ausführungsbeispiel zu entnehmen.

### Zeichnungen

Nachfolgend werden Ausführungsbeispiele der Erfindung anhand von Zeichnungen erläutert. Es zeigen
Die Figur 1 zeigt eine gelochte und beschichtete Bremsscheibe gemäß Stand der Technik.
Die Figur 2 zeigt einen Querschliff einer erfindungsgemäß beschichteten Bremsscheibe nach einem starken Bremsvorgang.

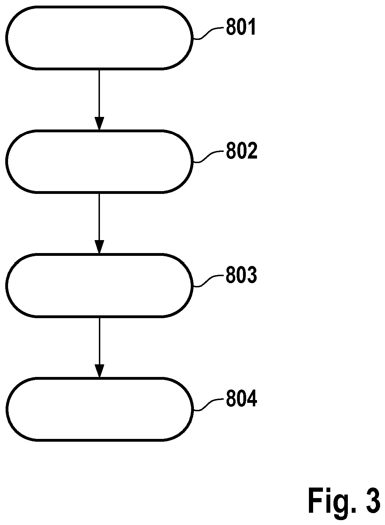

Die Figur 3 zeigt das erfindungsgemäße Herstellungsverfahren.

### Beschreibung von Ausführungsbeispielen

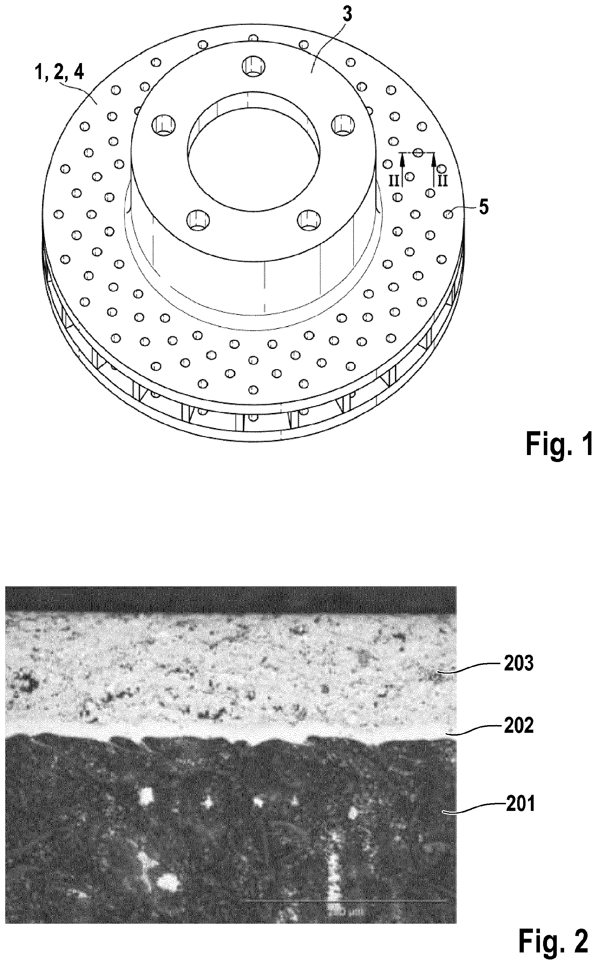

Die in Figur 1 dargestellte Bremsscheibe 1 weist einen kreisringscheibenförmigen Bremsring 2 und eine mit dem Bremsring 2 einstückige und koaxiale, napfförmige Nabe 3 auf. Der Reibring 2 bildet die eigentliche Bremsscheibe. Die Bremsscheibe 1 ist innenbelüftet, ihr Bremsring 2 ist doppelwandig. Äußere Stirnflächen des Bremsrings 2 bilden kreisringscheibenförmige Reibflächen 4 der Bremsscheibe 1. Die Reibflächen 4 sind die Oberflächen der Bremsscheibe 1, gegen die beim Bremsen nicht dargestellte Reibbremsbeläge gedrückt werden, um die Bremsscheibe 1 durch Reibung zu bremsen. Die Bremsscheibe 1 ist gelocht, d. h. sie weist Löcher 5 auf, die den Bremsring 2 durchsetzen. Die Bremsscheibe 1 besteht aus Grauguss oder einer Stahllegierung.

Die Reibflächen 4 der Bremsscheibe 1 sind mit einer Oberflächenbeschichtung versehen, die eine Verschleißfestigkeit und eine Korrosionsbeständigkeit erhöht. Die Oberflächenbeschichtung kann eine thermische Pulverbeschichtung sein, die beispielsweise durch Flamm- oder Lichtbogenspritzen aufgetragen ist. Die Oberflächenbeschichtung der Reibflächen 4 kann Carbide, insbesondere Metallcarbide, beispielsweise Chrom- oder Wolframcarbide aufweisen, die in eine Matrix, insbesondere eine metallische Matrix, aus beispielsweise Nickel- oder Kobalt eingelagert sind. Die die Verschleißfestigkeit und Korrosionsbeständigkeit erhöhende Oberflächenbeschichtung der Reibflächen 4 kann ein- oder mehrschichtig sein.

Der Kern der Erfindung gemäß der dargestellten Ausführungsform ist wie bereits erwähnt die Verwendung einer Verschleißschutzschicht auf Gusseisen-Bremsscheiben, die aus Wolframcarbid WC, Wolfram-Chromcarbid (W, Cr)₂C und Nickel-Chrom NiCr besteht. Bei (W, Cr)₂C handelt sich um das an sich bekannte Wolframdikarbid W₂C, in das Chrom mit unterschiedlicher Menge eingebaut ist. Daher wird dieses Mischkarbid als (W, Cr)₂C bezeichnet. Diese Phase verfügt über exzellente Oxidationsbeständigkeit und gute Verschleißbeständigkeit auch bei hohen Temperaturen bis 800 °C. Darüber hinaus steigen die Hochtemperatur-Festigkeit und - Oxidationsbeständigkeit von Nickel durch die Legierung mit Chrom deutlich. In der Beschichtung ist WC in der Matrixphase aus (W, Cr)₂C und NiCr gleichmäßig eingelagert. Ab einer Bremstemperatur von ca. 600 °C wird es sich an der Schichtoberfläche eine sehr dünne dichte Oxidschicht bilden, die NiWO₄, CrWO₄, Cr₂O₃ oder WO₃ umfassen kann. Durch die Bildung dieser Oxidschicht wird der weitere Oxidationsprozess der Verschleißschutzschicht erheblich verlangsamt, was signifikant die Oxidation und den Funktionalitätsverlust der Beschichtung bei hohen Temperaturen vermeidet.

Die Figur 2 zeigt der Querschliff einer mit WC-(W, Cr)₂C-NiCr beschichteten Gusseisen-Bremsscheibe nach einem Bremsfadingtest über 800 °C.

Mit dem Bezugszeichen 201 ist der Gusseisen-Grundkörper (geätzt, mit Phasenumwandlung), mit dem Bezugszeichen 202 eine Nickel-Zwischenschicht und mit 203 die WC-(W, Cr)₂C-NiCr-Schicht bezeichnet.

Die gebildete Oxidschicht an der Oberfläche der Verschleißschutzschicht 203 ist so dünn, dass es aus dem Schliffbild gar nicht beobachtet werden kann. Nach dem Fadingtest ist die Oberfläche der Verschleißschutzschicht 203 noch glatt und die Schichtdicke ist fast gleich wie im Neuzustand, was bedeutet, dass die Schicht nach dem Test über 800 °C fast nicht verschlissen wurde.

Eine Ausführungsform der mit WC-(W, Cr)₂C-NiCr beschichteten Gusseisen-Bremsscheiben ist eine direkte Beschichtung der Verschleißschutzschicht mittels Hochgeschwindigkeitflammspritzen (HVOF) auf den Gusseisen-Grundkörper. Um eine gute Schichthaftung auf dem Gusseisen-Grundkörper sicherzustellen, kann die Oberfläche des Gusseisen-Grundkörpers vor der HVOF-Beschichtung durch z.B. Sandstrahlen aufgeraut werden.

Eine weitere Ausführungsform ist, eine metallische Zwischenschicht als Haftvermittler auf den Gusseisen-Grundkörper vor der HVOF-Beschichtung der Verschleißschutzschicht aufzubringen. Hierzu wird bevorzugt Nickel oder Nickelbasislegierungen als der metallischen Zwischenschicht verwendet.

Die bevorzugten Zusammensetzungen der WC-(W, Cr)₂C-NiCr-Verschleißschutzschicht sind:
- 30-50 Gewichtsprozent WC,
- 20-40 Gewichtsprozent (W, Cr)₂C,
- 10-35 Gewichtsprozent NiCr,
- sowie Verunreinigungen

Anhand der Figur soll nun das Verfahren zur Herstellung der erfindungsgemäßen Bremsscheibe erläutert werden.

Im (optionalen) Schritt 801 wird der in dieser Ausführungsform als Grauguss ausgeführte Grundkörper bereitgestellt. Anschließend wird im Schritt 802 die Reibfläche des Grundkörpers wie oben erwähnt behandelt.

Im (optionalen) Schritt 803 wird der die Reibfläche des Grundkörpers mit der oben erwähnten Zwischenschicht belegt.

Im Schritt 804 wird dann die erfindungsgemäße Beschichtung aufgebracht.

## Patentansprüche

1. Bremsscheibe (1) mit
• wenigstens einer aus einem, insbesondere aus Grauguss gefertigten, Grundkörper (201) bestehenden Reibfläche (4) und
• wenigstens einer auf wenigstens Teile des Reibfläche (4) aufgebrachten Beschichtung (203),
**dadurch gekennzeichnet, dass**
• die Beschichtung (203) wenigstens Wolfram-Chromcarbid ((W, Cr)₂C) und Nickel-Chrom (NiCr) enthält.

2. Bremsscheibe (1) nach Anspruch 1, **dadurch gekennzeichnet, dass** die Beschichtung (203) weiterhin Wolframcarbid (WC) enthält.

3. Bremsscheibe (1) nach Anspruch 2, **dadurch gekennzeichnet, dass** in der Beschichtung (203) das Wolframcarbid (WC) in einer Matrixphase aus Wolfram-Chromcarbid ((W, Cr)₂C) und Nickel-Chrom (NiCr) im Wesentlichen gleichmäßig eingelagert ist.

4. Bremsscheibe (1) nach Anspruch 2, **dadurch gekennzeichnet, dass** die Beschichtung (203) eine Oberflächenschicht aufweist, die Oxide enthält.

5. Bremsscheibe (1) nach Anspruch 4, **dadurch gekennzeichnet, dass** die Oberflächenschicht wenigstens Nickelwolframoxid (NiWO₄) und/oder Chromwolframoxid (CrWO₄) und/oder Chromoxid (Cr₂O₃) und/oder Wolframoxid (WO₃) enthält.

6. Bremsscheibe (1) nach Anspruch 4 und/oder 5, **dadurch gekennzeichnet, dass** die Oberflächenschicht, ausgehend von einer Beschichtung gemäß Anspruch 1, erst nach Bremsvorgängen bestimmten Ausmaßes vorliegt.

7. Bremsscheibe (1) nach Anspruch 1, **dadurch gekennzeichnet, dass** die Beschichtung (203) direkt auf den Grundkörper (201) aufgebracht ist, wobei insbesondere vorgesehen ist, dass die Beschichtung (203) auf eine modifizierte Oberfläche des Grundkörper aufgebracht ist.

8. Bremsscheibe (1) nach Anspruch 1, **dadurch gekennzeichnet, dass** die Beschichtung (203) mittels wenigstens einer Zwischenschicht (202) auf den Grundkörper (201) aufgebracht ist.

9. Bremsscheibe (1) nach Anspruch 8, **dadurch gekennzeichnet, dass** die Zwischenschicht (202) Nickel (Ni) enthält und/oder eine mittels einer Behandlung der Oberfläche des Grundkörpers (201) realisiert ist.

10. Verfahren zur Herstellung einer Bremsscheibe (1) mit wenigstens einer aus einem, insbesondere aus Grauguss gefertigten, Grundkörper bestehenden Reibfläche und wenigstens einer auf wenigstens Teile des Reibfläche aufgebrachten Beschichtung (203),
**gekennzeichnet durch den Schritt (804)**
Beschichten von wenigstens einem Teil der Reibfläche mit wenigstens Wolfram-Chromcarbid ((W, Cr)₂C) und Nickel-Chrom (NiCr).

11. Verfahren nach Anspruch 10, **dadurch gekennzeichnet, dass** die Beschichtung (203) weiterhin Wolframcarbid (WC) enthält.

12. Verfahren nach Anspruch 11, **dadurch gekennzeichnet, dass** in der Beschichtung (203) das Wolframcarbid (WC) in einer Matrixphase aus Wolfram-Chromcarbid ((W, Cr)₂C) und Nickel-Chrom (NiCr) im Wesentlichen gleichmäßig eingelagert ist.

## Claims

1. Brake disk (1) comprising
• at least one friction surface (4) consisting of a main element (201), in particular a main element made of gray cast iron, and
• at least one coating (203) applied to at least parts of the friction surface (4),
**characterized in that**
• the coating (203) contains at least tungsten-chromium carbide ((W, Cr)₂C) and nickel-chromium (NiCr).

2. Brake disk (1) according to Claim 1, **characterized in that** the coating (203) additionally contains tungsten carbide (WC).

3. Brake disk (1) according to Claim 2, **characterized in that**, in the coating (203), the tungsten carbide (WC) is essentially uniformly dispersed in a matrix phase composed of tungsten-chromium carbide ((W, Cr)₂C) and nickel-chromium (NiCr).

4. Brake disk (1) according to Claim 2, **characterized in that** the coating (203) has a surface layer containing oxides.

5. Brake disk (1) according to Claim 4, **characterized in that** the surface layer contains at least nickel-tungsten oxide (NiWO₄) and/or chromium-tungsten oxide (CrWO₄) and/or chromium oxide (Cr₂O₃) and/or tungsten oxide (WO₃) .

6. Brake disk (1) according to Claim 4 and/or 5, **characterized in that** the surface layer on a coating according to Claim 1 is present only after braking events of particular severity.

7. Brake disk (1) according to Claim 1, **characterized in that** the coating (203) has been applied directly to the main element (201), with the coating (203) particularly preferably having been applied to a modified surface of the main element.

8. Brake disk (1) according to Claim 1, **characterized in that** the coating (203) has been applied by means of at least one intermediate layer (202) to the main element (201).

9. Brake disk (1) according to Claim 8, **characterized in that** the intermediate layer (202) contains nickel (Ni) and/or has been realized by means of a treatment of the surface of the main element (201).

10. Process for producing a brake disk (1) comprising at least one friction surface consisting of a main element, in particular a main element made of gray cast iron, and at least one coating (203) applied to at least parts of the friction surface,
**characterized by the step (804)**
coating of at least part of the friction surface with at least tungsten-chromium carbide ((W, Cr)₂C) and nickel-chromium (NiCr).

11. Process according to Claim 10, **characterized in that** the coating (203) additionally contains tungsten carbide (WC).

12. Process according to Claim 11, **characterized in that**, in the coating (203), the tungsten carbide (WC) is essentially uniformly dispersed in a matrix phase composed of tungsten-chromium carbide ((W, Cr)₂C) and nickel-chromium (NiCr).

## Revendications

1. Disque de frein (1), comprenant
• au moins une surface de friction (4) composée d'un corps de base (201), en particulier fabriqué en fonte grise, et
• au moins un revêtement (203) appliqué au moins sur certaines parties de la surface de friction (4),
**caractérisé en ce que**
• le revêtement (203) contient au moins du carbure de tungstène-chrome ((W, Cr)₂C) et du nickel-chrome (NiCr).

2. Disque de frein (1) selon la revendication 1, **caractérisé en ce que** le revêtement (203) contient en outre du carbure de tungstène (WC).

3. Disque de frein (1) selon la revendication 2, **caractérisé en ce que** dans le revêtement (203), le carbure de tungstène (WC) est incorporé de manière substantiellement homogène dans une phase matricielle composée de carbure de tungstène-chrome ((W, Cr)₂C) et de nickel-chrome (NiCr).

4. Disque de frein (1) selon la revendication 2, **caractérisé en ce que** le revêtement (203) présente une couche superficielle qui contient des oxydes.

5. Disque de frein (1) selon la revendication 4, **caractérisé en ce que** la couche superficielle contient au moins de l'oxyde de nickel-tungstène (NiWO₄) et/ou de l'oxyde de chrome-tungstène (CrWO₄) et/ou de l'oxyde de chrome (Cr₂O₃) et/ou de l'oxyde de tungstène (WO₃) .

6. Disque de frein (1) selon la revendication 4 et/ou 5, **caractérisé en ce que** la couche superficielle, en partant d'un revêtement selon la revendication 1, n'est présente qu'après des opérations de freinage d'une certaine envergure.

7. Disque de frein (1) selon la revendication 1, **caractérisé en ce que** le revêtement (203) est appliqué directement sur le corps de base (201), dans lequel il est prévu en particulier que le revêtement (203) soit appliqué sur une surface modifiée du corps de base.

8. Disque de frein (1) selon la revendication 1, **caractérisé en ce que** le revêtement (203) est appliqué sur le corps de base (201) au moyen d'au moins une couche intermédiaire (202).

9. Disque de frein (1) selon la revendication 8, **caractérisé en ce que** la couche intermédiaire (202) contient du nickel (Ni) et/ou est réalisée au moyen d'un traitement de la surface du corps de base (201).

10. Procédé de fabrication d'un disque de frein (1) comprenant au moins une surface de friction composée d'un corps de base, en particulier fabriqué en fonte grise, et au moins un revêtement (203) appliqué au moins sur certaines parties de la surface de friction, **caractérisé par** l'étape (804) consistant à recouvrir au moins une partie de la surface de friction d'au moins de carbure de tungstène-chrome ((W, Cr)₂C) et de nickel-chrome (NiCr).

11. Procédé selon la revendication 10, **caractérisé en ce que** le revêtement (203) contient en outre du carbure de tungstène (WC).

12. Procédé selon la revendication 11, **caractérisé en ce que** dans le revêtement (203), le carbure de tungstène (WC) est incorporé de manière substantiellement homogène dans une phase matricielle composée de carbure de tungstène-chrome ((W, Cr)₂C) et de nickel-chrome (NiCr).
